Europäisches Patentamt

European Patent Office

Office européen des brevets

(11) Publication number: **0 297 500**
**A1**

## (12) EUROPEAN PATENT APPLICATION

(21) Application number: 88110275.0

(22) Date of filing: 28.06.88

(51) Int. Cl.4: **D21H 5/12 , D21H 3/38 , D04H 1/64**

(30) Priority: **29.06.87 US 67028**

(43) Date of publication of application:
**04.01.89 Bulletin 89/01**

(84) Designated Contracting States:
**DE FR GB IT SE**

(71) Applicant: **MANVILLE CORPORATION**
**P.O. Box 5108**
**Denver, CO 80217(US)**

(72) Inventor: **Gill, Frederick Albert**
**2441 W. Rowland Avenue**
**Littleton Colorado 80120(US)**
Inventor: **Tocci, Mario Peter**
**5412 S. Camargo Road**
**Littleton Colorado 80123(US)**

(74) Representative: **Grättinger, Günter**
**Wittelsbacherstrasse 5 Postfach 16 49**
**D-8130 Starnberg(DE)**

(54) **Thermoformable fibrous mat and process for making the same.**

(57) A fibrous mat having a high degree of flexibility and thermoformability. The mat comprises glass fibers and/or organic, e.g. polyester, polyamide, and acrylic, fibers bonded together with a thermoplastic binder, e.g. an elastomeric latex emulsion. A process for forming the flexible, thermoformable fibrous mat is also disclosed.

EP 0 297 500 A1

## THERMOFORMABLE FIBROUS MAT AND PROCESS FOR MAKING THE SAME

### Field of the Invention

This invention relates to a thermoformable, fibrous mat and more particularly, it relates to a thermoformable fibrous mat comprising glass fibers and/or organic fibers and a thermoplastic binder. This invention further relates to a novel process for making the thermoformable, fibrous mat.

### Background of the Invention

Glass fiber mats and the like have been manufactured for several years for use as a facing material in the automotive and building industries. These glass fiber mats are typically made by first forming glass fibers on a wire and then treating them with a thermosetting resin, e.g. a urea-formaldehyde, to form a loosely packed web of treated fibers. This web is then passed to an oven at a selected high temperature where the unbonded web of glass fibers is dried to remove water which upon further heating cures the binder resin to form a glass fiber mat. U.S. Patent No. 4,637,951 is an example of such a glass fiber mat.

Whereas the foregoing types of glass fiber mats are satisfactory for uses in applications where low flexibility is needed, they are not so satisfactory for applications where some degree of thermoformability is required. Such mats tend to be stiff and are hard to conform to certain shapes or contours without tearing, wrinkling, or creasing the mats.

U.S. Patent No. 4,596,737 discloses contacting the surface of a glass fiber mat containing a heat curable, e.g. thermosetting, binder with a latex polymer thereby imparting a higher degree of flexibility and ductility to the mat. Whereas such a mat is satisfactory for its intended use, the flexibility of the mat is still limited due to its construction of glass fibers with a thermosetting binder. There are situations such as in molding, pleating, or corrugating operations where a higher degree of thermoformability and flexibility of the mat would be highly desirable.

The flexibility of the mat in U.S. 4,596,737 is imparted only through the practice of an extra process step, i.e. the coating of the surface of the cured mat with the latex polymer. In some situations, it may not be either practical or economical to practice this extra process step.

What is needed in the industry, therefore, is a fibrous mat which has good flexibility and thermoformability properties and which can be made by an economical and efficient process.

### Brief Summary of the Invention

In one embodiment of the present invention, Applicants have provided a novel fibrous mat which has good flexibility and thermoformability properties. Briefly, Applicants' inventive mat comprises glass fibers and/or organic fibers, e.g. polyesters and nylons, and a thermoplastic binder. Applicants' inventive mat is quite useful in applications, e.g. molding, where the properties of flexibility and thermoformability are very important.

In another embodiment, Applicants provide a novel, economical, and efficient process for making a highly flexible and thermoformable fibrous mat. Briefly, Applicants' inventive process comprises the steps of mixing together fibers in slurry; collecting the fibers; combining the collected fibers with a thermoplastic binder; and drying the combined fibers under suitable conditions of time and temperature. By practicing Applicants' inventive process, flexibility and thermoformability are imparted into the mat without the necessity of an extra process step of surface coating the mat. Not only does the thermoplastic binder impart flexibility and thermoformability to the mat, but so do the organic fibers when they are utilized.

Other features and aspects of the invention will be made clear, as well as the various benefits of the invention, in the more detailed description which follows.

## Detailed Description of the Invention

In the present invention, the glass fibers utilized can be those produced in any conventional or suitable manner or alternatively, any of those which are commercially available can be used. The glass fibers are typically produced by flowing streams of molten materials through small orifices and then drawing out the streams at speeds capable of attenuating the materials into fibers of desired diameters.

Based upon the total weight of the mat, about 0 to 95 wt%, and preferably about 10 to 90 wt%, glass fibers are utilized.

Preferably, at least about 5 wt%, and more preferably, at least about 40 wt% of the glass fibers utilized in the inventive mat will have average fiber diameters of greater than about 6 microns and preferably greater than about 10 microns. Preferably, the fibers will have average diameters of no greater than about 25 microns.

In situations where glass fibers of 6 microns or less average diameter are employed, the average diameter of these smaller fibers will preferably be in the range of about 0.05 to 6 microns and more preferably about 0.1 to 0.7 microns.

Generally, from 0 to about 95 wt%, and preferably, from about 10 to 90 wt% of organic fibers can be utilized in the inventive mat based upon the total weight of the mat.

Although it is within the scope of the present invention that non-synthetic organic fibers such as cellulose fibers can be utilized, it is preferred to use synthetic polymeric organic fibers such as polyolefins, polyesters, polyamides, acrylics, and the like.

Preferably, the organic fiber will have a filament size in the range of about 1.1 to 20.0 denier per filament and most preferably about 1.5 to 15 denier per filament. Preferably the fiber length will be from about 1/4 inch to 1 1/2 inches.

The organic fibers enhance the thermoforming properties and in some instances the physical/chemical properties of the inventive fibrous mat.

It is thought that any thermoplastic binder may be utilized in the present invention. Preferably, the thermoplastic binder will be an elastomeric latex emulsion. The term elastomeric latex emulsion is defined herein as synthetic polymers having properties of natural rubber (such as extendability) converted into an emulsion.

Examples of such latex emulsions include but are not limited to ethylene-vinyl acetate-vinyl chloride; butadiene-vinylidene chloride; ethylene-vinyl chloride; butadiene-styrene; and acrylic copolymers.

The presently preferred latex emulsion is an ethylene-vinyl acetate-vinyl chloride terpolymer. This latex imparts not only high flexibility and thermoformability properties but also is formulated to impart fire resistance properties to the inventive fibrous mat.

The binder may optionally contain various fillers, pigments, dyes, etc. if desired.

Generally, the binder will constitute about 5 to 90 wt% and preferably, about 15 to 50% of the inventive mat based upon its total weight.

The inventive process for making a fibrous mat with good flexibility and thermoformability properties comprises first mixing together the fibers utilized collecting the fibers; and then combining the collected fibers with a thermoplastic binder (preferably one of a latex nature as disclosed earlier herein). The combination of fibers and binder are then dried.

The binder and fibers are combined in any suitable manner. Typically, the fibers are dispersed and mixed together in an aqueous medium with the use of suitable dispersion aids and viscosity control agents as needed. The fibers are then randomly collected on a forming wire. The amount of fiber or weight of fiber per unit area may vary depending upon end use performance requirements of the mat. The fibers collected on the forming wire are then conveyed to a receptacle containing a liquid, thermoplastic binder such as a latex emulsion. The resulting fibrous web is then dried under suitable conditions of time and temperature.

The resulting product is a fibrous mat having good flexibility and thermoformability characteristics.

Typical mat compositions, properties, and possible fabric applications of the inventive mat are shown in the following table.

## INVENTIVE MAT COMPOSITION – % BY WEIGHT

### INGREDIENTS

| Ingredient | | | | |
|---|---|---|---|---|
| Glass Fiber, 10 micron x 1/2 in | 66.5% | 35% | - | - |
| 13 micron x 3/4 in | - | - | 45% | 45% |
| 0.5 micron diameter | 8.5% | 5% | - | - |
| Nylon fiber 3.0 denier x 1/2 in | - | 35% | 30% | - |
| Polyester fiber 1.8 denier x 1/2 in | - | - | - | 30% |
| Ethylene-vinyl acetate-vinyl chloride latex emulsion binder | 25% | 25% | 25% | 25% |

### TYPICAL PROPERTIES

| Property | | | | |
|---|---|---|---|---|
| Weight, gms/sq ft | 6.85 | 7.45 | 7.3 | 7.0 |
| Thickness, mils | 13 | 22 | 26 | 26 |
| Fraziers air permeability, cfm/sq ft | 86 | 271 | 533 | 613 |
| Mullen burst, psi | 27 | 37 | 37 | 31 |
| Tensile – MD lbs/3 in width | 42 | 39 | 38 | 26 |
| –CMD lbs/3 in width | 31 | 30 | 18 | 11 |
| Tear strength – MD, grams | 136 | 420 | 560 | 466 |
| CMD, grams | 180 | 515 | 648 | 500 |

### POSSIBLE APPLICATIONS

| | | | |
|---|---|---|---|
| Facer sheet for rigid fiber glass duct insulation | Facer sheet for rigid fiber glass duct insulation / Facer sheet for molding applications up to 650°F. | Facer sheet for molding applications up to 650°F | Facer sheet for modling applications up to 400°F |

The foregoing data illustrate that the inventive mat has a wide variety of applications where the properties of thermoformability and flexibility are important and possesses physical properties which are generally associated with non-woven glass fiber fabrics.

Reasonable modifications and variations of the foregoing disclosure are possible without departing from either the spirit or scope of the present invention as defined in the claims.

## Claims

1. A thermoformable, fibrous mat comprising:
   (a) about 0 to 95 wt% glass fibers wherein at least about 5 wt% of said glass fibers have an average fiber diameter of at least about 6 microns;
   (b) 0 to about 95 wt% organic fibers; and
   (c) about 5-90 wt% thermoplastic binder.

2. A thermoformable, fibrous mat according to claim 1 comprising:
   (a) about 10 to 90 wt% of said glass fibers;
   (b) about 10 to 90 wt% of said organic fibers; and
   (c) about 15 to 90 wt% of said thermoplastic binder.

3. A thermoformable, fibrous mat according to claim 2 wherein at least about 40 wt% of said glass fibers have an average fiber diameter of at least about 10 microns.

4. A thermoformable, fibrous mat according to claim 1 wherein said organic fiberrs have an average fiber diameter in the range of about 1.1 to 20.0 denier.

5. A thermoformable, fibrous mat according to claim 1 wherein said organic fibers are polymeric fibers selected from the group consisting of polyolefins, polyamides, polyesters, and acrylics and mixtures thereof.

6. A thermoformable, fibrous mat according to claim 1 wherein said thermoplastic binder is a latex.

7. A thermoformable, fibrous mat according to claim 6 wherein said latex is an emulsion of an ethylene-vinyl acetate -vinyl chloride terpolymer.

8. A process for making a thermoformable fibrous mat, said process comprising the steps of:
   (a) mixing together fibers selected from the group consisting of:
   (i) glass fibers wherein at least 5 wt% of said glass fibers have an average fiber diameter of at least about 6 microns; and
   (ii) organic fibers; and
   (iii) combinations thereof;
   (b) collecting the resulting mixture of fibers;
   (c) combining said mixture of fibers with about 5-90 wt% thermoplastic binder based upon the total weight of fibers and binder; and
   (d) drying the resulting combination of fibers and thermoplastic binder.

9. A process according to claim 8 wherein said thermoplastic binder is a latex.

10. A process according to claim 9 wherein said latex is an emulsion of an ethylene-vinyl acetate-vinyl chloride terpolymer.

## EUROPEAN SEARCH REPORT

European Patent Office

Application Number

EP 88 11 0275

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 071 219 (THE DOW CHEMICAL CO.) * Pages 2-6; examples 1-3 * | 1,2,5,6 | D 21 H 5/12 D 21 H 3/38 D 04 H 1/64 |
| X | FR-A-2 475 970 (CARTONNINES REUNIES VOISIN ET PASCAL) * Claims 1,5-7; page 2, lines 2-28; page 3, lines 2-27; examples 2,3,5 * | 1,3,5,6 | |
| X | ABSTRACT BULLETIN OF THE INSTITUTE OF PAPER CHEMISTRY, vol. 55, no. 7, January 1985, page 872, no. 8336, Appleton, Wisconsin, US; & JP-A-208 497/83 (KOJIN CO., LTD) 05-12-1983 * Abstract * | 1,2,5,6 ,8,9 | |
| X | GB-A-2 108 166 (GEORGIA-BONDED FIBERS) * Claims 1-6; figure 2; page 3, line 45 - page 5, line 5; page 6, line 49 - page 7, line 12; page 9, lines 4-53; pages 10-14 * | 1,2,5,6 ,8,9 | |
| X | EP-A-0 145 522 (ARJOMARI-PRIOUX) * Claims 1-4,7,8,10,11 * | 1-3,5-7 ,9,10 | TECHNICAL FIELDS SEARCHED (Int. Cl.4) D 21 H |
| A | FR-A-1 358 855 (RIEGEL PAPER) * Drawing; abstracts 1,5,8,9 * | 1,6,8,9 | |
| A | US-A-4 274 916 (R.E. GROSE) | | |
| A | GB-A-2 075 077 (MONTEDISON) | | |
| A | GB-A-2 051 170 (ARMSTRONG WORLD IND.) | | |
| A | EP-A-0 018 961 (ROCKWOOL) | | |

The present search report has been drawn up for all claims

| Place of search | Date of completion of the search | Examiner |
|---|---|---|
| THE HAGUE | 12-09-1988 | NESTBY K. |

EPO FORM 1503 03.82 (P0401)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document